# EUROPÄISCHE PATENTSCHRIFT

(11) **EP 1 748 887 B1**
(45) Veröffentlichungstag und Bekanntmachung des Hinweises auf die Patenterteilung: **10.07.2013**
(21) Anmeldenummer: 05740220.8
(22) Anmeldetag: 04.05.2005
(51) Int. Cl.: B32B 17/10, E06B 3/54, E06B 3/58, E04F 13/08, E04F 13/14

(54) **VERBUNDSCHEIBE UND HALTEKONSTRUKTION MIT MINDESTENS EINER SOLCHEN VERBUNDSCHEIBE**
COMPOSITE PANE AND RETAINING STRUCTURE WITH AT LEAST ONE COMPOSITE PANE OF THIS TYPE
PLAQUE COMPOSITE ET STRUCTURE DE RETENUE COMPORTANT AU MOINS UN TELLE PLAQUE COMPOSITE

(30) Priorität: 10.05.2004 DE 102004023638; 23.07.2004 DE 202004011577 U
(43) Veröffentlichungstag der Anmeldung: 07.02.2007
(73) Patentinhaber: Saint-Gobain Glass France S.A., 92400 Courbevoie (FR); Josef Gartner GmbH, 89423 Gundelfingen (DE)
(72) Erfinder: SCHAUMBERGER, Franz, A-4421 Aschach (AT); HEGER, Franz, 89423 Gundelfingen (DE); HEIMHUBER, Markus, 85386 Dietersheim (DE)
(74) Vertreter: advotec.
(86) Internationale Anmeldenummer: PCT/EP2005/052050
(87) Internationale Veröffentlichungsnummer: WO 2005/108060

(56) Entgegenhaltungen:
- EP-A- 0 320 674
- EP-A- 0 525 690
- WO-A-93/02269
- DE-A1- 10 022 446
- DE-A1- 19 915 478
- GB-A- 708 242
- US-A- 2 382 956
- US-A- 2 659 686
- US-A- 3 953 630

## Beschreibung

Die Erfindung bezieht sich auf eine Verbundscheibe mit den Merkmalen des Oberbegriffs des Patentzanspruchs 1 und auf eine Haltekonstruktion mit mindestens einer solchen Verbundscheibe.

In zunehmenden Maße werden in der Architektur Ganzglasfassaden und Konstruktionselemente aus Glas eingesetzt, wobei aus Sicherheitsgründen in den meisten Fällen Verbundsicherheitsglas verwendet wird. Dabei müssen die Glaseinheiten aus Verbundsicherheitsglas in geeigneter Weise an einer Unterkonstruktion, einem Fundament, an Halteschienen oder -profilen, Seilen oder dgl. befestigt werden, wobei man zunehmend verlangt, dass auch im Bruchfall eine sichere Befestigung der Scheibe erhalten bleibt.

EP 320 674 A2 beschreibt eine Verbundscheibe mit den Gattungsmerkmalen, die an einer Konstruktion mithilfe von flexiblen Halteelementen festgelegt ist, die einerseits in die Verbund-Zwischenschicht eingelegt sind und andererseits wenigstens über zwei einander gegenüber liegende Stirnkanten der Verbundscheibe hinausragen. Diese Halteelemente werden auch als Lappen bezeichnet und bestehen mindestens zum Teil aus einem Gewebe und/oder Geflecht und/oder Gewirke, das Fasern aus Metall, Glas oder Kunststoff enthalten kann. Entlang einer Kante können zwei oder mehr Halteelemente mit gegenseitigen Abständen verteilt angeordnet sein. Während die Verbundscheiben an sich mit der Unterkonstruktion durch Aufkleben auf Rahmen verbunden werden (dies wird auch als "structural glazing" bezeichnet), werden die Halteelemente unabhängig von der Verklebung gesondert mechanisch mit der Unterkonstruktion verbunden. Mit dieser Gestaltung wird das Risiko des Herunterfallens von Glasbruchstilcken aus der Plattenkonstruktion selbst bei einem eventuellen Versagen der Verklebung stark vermindert.

DE 23 12 491 A1 beschreibt Windschutzscheiben insbesondere für Flugzeuge, die ebenfalls mit in die Zwischenschicht eingesetzten Glasfaser-Gewebematten randseitig besonders fest und zuverlässig an den Fensterrahmen angebunden sind, damit auch im Bruchfall die Scheibe noch im Rahmen gehalten werden kann. Jedoch sind bei dieser relativ alten Konstruktion so große Abmessungen der Scheibendicken und der Zwischenschichten vorgesehen, dass sie für normale Einsatzzwecke nicht in Frage kommen können. Außerdem erstreckt sich dieser hochfeste Einsatz gemäß dieser Beschreibung kontinuierlich um den gesamten Umfang der betreffenden Verbundscheibe.

Bei einer aus DE 41 25 182 A1 bekannten Verbundglasscheibe sind in die thermoplastische Zwischenfolie einer aus mindestens zwei Einzelscheiben bestehenden Verbundglasscheibe eignensteife Halteelements eingelegt, die stirnseitig aus der Verbundglasscheibe herausgeführt werden. Die Haltelements weisen plattenfürmige Bereiche aus mit Durchhrüchen versehenem Flachmaterial auf, mit denen sie in Randbereichen der Verbundglasscheibe in die Verbindungsschicht swischen zwei Einzelglasscheiben eingelegt sind. Entlang einer Kante der Verbundscheibe können mehrere Haltelemente mit relativ kurzen Längen mit Abstand zueinander eingesetzt werden. Die Verbindungsschicht soll in die besagten Durchhrüche eindringen und nach dem Aushärten eine formschlüssige Verbindung mit den Halteelementen bilden. Die Fließfähigkeit der üblicherweise verwendeten organischen Zwishenschichten reicht in der Regel jedoch nicht aus, die Durchhrüche auszufüllen. Dadurch wird nicht nur die Festigkeit des Glaselements verringert, sondem es können sich auch Blasen bildne. Es wird auch eine Variante erwähnt, in der lediglich der in den Verbiund eingebette Abschnitt der halteelemente plattenförmig ist, während der zum verbinden mit der Unterkonstruktion vorgesehene Abschnitt auch zu einem Befestigungselemnt geförmt sein kann, z.B. hakenfürmig oder aus Rundmaterial bestehend.

Unter dem Produktnamen "Sentryglas ® Plus" (Sentryglas ist eine eingetragene Marks der Firm DuPont) ist eine Zwischenschichtfolie für Verbundglas verfügbar, die wesentlich festene Verbindungen erlaubt als die harkömmlichen PVB-Folien, die für normale Verbundglasscheiben sehr verbreitet verwendet werden. US 6,559,230 B2 beschreibt eine wärmehärtbare Zusammensetzung zum Herstellen einer Verbundalcherheitsglas-Zwillschenschicht.
Aus der EP 0 525 690 A ist ferner ein Element für eine Glaskonstruktion mit einer Verbundglasscheibe bekannt, bei der in der Verbindungsschicht zwischen den Einzeiglasscheiben aus dieser herausgeführte Sicherungselemente eingelegt sind. Diese sind als eigensteife Haltelemente ausgebildet, die über flach plattenförmige Elemente aus Flachmaterial in die Randbereiche der Verbundglasscheibe zwischen die Einzelscheiben eingelegt sind. Nachteilig bei dieser bekannten Verbundglasscheibe ist insbesondere, dass die Verbindung Scheibe Tragstruktur im wesentlichen starr ist, so dass Verformungen in der Tragkonstruktion zu einem Bruch der starren Verbindung und einer Zerstörung der Verbundglasscheibe führen können.

Der Erfindung liegt die Aufgabe zu Grunde, ausgehend von EP 320 674 A2 eine weiter verbesserte Verbundscheibe mit mindestens zwei starren Scheiben und einer diese flächig-adhäsiv miteinander verbindenden Zwischenschicht für eine hochfeste und dauerhafülte Verankerung in eine Wand- oder Deckenkonstruktion vorzubereiten, sowie auch eine Haltekonstruktion mit mindestens einer solchen Verbundscheibe anzugeben.

Diese Aufgabe wird erfindungagemäß mit den Merkmalen des Schützanspruchs 1 hinsichtlich der Verbundscheibe und des unabhängigen Anspruchs 15 hinsichtlich der Haltekonstruktion gelöst. Die Merkmale der den unabhängigen Ansprüchen jeweils nachgeordneten unteransprüche geben vorteilhafte Weiterbildungen dieser Erfindung an. Der weitere nebengeordnete Anspruch 24 bezieht sich auf eine Gebäude-Verglasung mit mindestens einer Verbundscheibe gemäß der Erfindung.

Mit Platte, Scheibe, Einzelscheibe sind hier plattenförmige Elemente gemeint, die vorzugsweise aus Glas, Glaskeramik oder Kunststoff bestehen und vorzugsweise transluzent oder transparent sind. Es ist aber auch möglich, opake plattenförmige Elemente aus Metall oder einem anderen undurchsichtigen Werkstoff einzusetzen. Die verschiedenen Materialien können auch in Kombinationen in der erfindungsgemäßen Verbundscheibe verwendet werden. Diese Verbundscheiben können ihrerseits wiederum Teil eines (weiteren) Verbundes nach Art einer Verbund- und/oder Isolierglasscheibe sein.

Indem man den äußeren Bereich jedes Halteelements mittels hochfester Fäden, Fasern oder Gewebe mit dem innen liegenden, im Verbund eingebetteten Flächenabschnitt der Halteelemente verbindet, wird abgesehen von der hohen Festigkeit der Fäden, Fasern oder Gewebe selbst eine sehr hohe Reißfestigkeit des gesamten Halteelements erreicht.

Der aus dem Verbund nach außen ragende flexible Abschnitt jedes Halteelements kann grundsätzlich direkt mit einer Halte- oder Unterkonstruktion, oder mit einem an dieser befestigten Beschlag verklebt oder verklemmt werden. Sollte dies nicht möglich oder nicht erwünscht sein, so können daran vorteilhaft Mittel zum Befestigen wie Lochbohrungen oder -ösen, oder Haltekörper wie Anschweißmuttern, Profilabschnitte, Stifte, Rohre oder ähnliches angebracht sein. Natürlich können auch abgewinkelte Bereiche zum Befestigen vorgesehen werden. Insgesamt werden aber Lösungen bevorzugt, bei denen die Halteelemente nicht dicker sind als die Verbundscheiben selbst, sich also nicht über deren Hauptflächen erheben. Auch diese vorteilhafte Ausbildung kann jedoch bei Bedarf zugunsten dickerer Haltekörper abgeändert werden.

Mit einem "äußeren" oder "nach außen ragenden" Bereich des Halteelements oder der Halteelemente ist gemäß der vorliegenden Erfindung nicht nur ein über eine Haubenkante oder Umfangskante der jeweiligen Verbundscheibe vorstehender Bereich oder Abschnitt, sondern auch ein in eine Lochbohrung der Verbundscheibe sich hinein erstreckender Bereich oder Abschnitt gemeint. Auch der Umfangsrand einer Lochbohrung wird in diesem Fall als ein Rand der Verbundscheibe angesehen.

Abgesehen von Verbundscheiben mit randseitigen (rahmenartigen) Befestigungseinrichtungen können erfindungsgemäß also auch sogenannte punktgehaltene Verglasungen mit Sicherungs-Halteelementen der hier beschriebenen Art ausgestattet werden.

Da zugehörige Haltekörper außerhalb der fertigen Verbundscheiben flexibel an die Halteelemente angebunden sind, besteht nur ein sehr geringes Risiko einer Vorschädigung bei Transport, Handhabung und Montage. Außerdem erlaubt diese flexible Ausgestaltung auch im eventuellen Schadenfall ein quasi elastisches Auffangen der beschädigten Verbundscheibe an der Haltekonstruktion bzw. an einem mit dieser verbundenen Beschlag. Die Verbundscheibe bleibt wegen der eingebetteten Zwischenschicht flächig-strukturell noch erhalten und behält jedenfalls eine gewisse Abdeck-, Dämm- oder und Dämpfüngswirkung bei.

Man hat Muster solcher Halteelemente hergestellt, in Verbundscheiben eingebettet, und dann Zugversuche mit ihnen angestellt. Es wurden überaus hohe Wider-standskräfte erreicht. Ein Versagen trat in allen Fällen im Bereich der Fäden oder Gewebestränge auf. In keinem Fall konnte ein Halteelement zur Gänze aus dem Verbund herausgerissen werden. Letztlich lässt sich also mit einer geeigneten Wahl eines Materials für Fäden oder Gewebe eine Festigkeit erreichen, die an die Reißkräfte oder - lasten sogar der starren Scheiben heranreicht.

Als Materialien für die Halteelemente und Haltekörper kommen Metalle (z. B. Titan, Edelstahl), Kunststoffe, Kunststoff-Metall-Verbunde und dgl. in Frage. Gute Ergebnisse erzielte man mit Halteelementen, deren in den Verbund eingebettete Flachabschnitte aus mit Glasfasern oder Kohlefasern verstärkten hochfesten Kunststoffen bestanden. Natürlich wird eine raue Oberfläche der Flachabschnitte die Adhäsion zu den Klebe-Zwischenschichten noch weiter verbessern. Für die Fäden oder Gewebestränge wurde Kevlar verwendet, auch hierzu gibt es jedoch Alternativen, die je nach Lastfall ausgewählt werden können. Die Fäden oder Gewebe können ferner gesponnen, geflochten, in Faserform vorliegen und verarbeitet werden.

In einer Ausführungsförm bestehen eine oder mehrere der Scheiben der erfindungsgemäßen Verbundglasscheibe aus vorgespanntem Glas. Dies ist zwar nicht unbedingt aus Sicherheitsgründen erforderlich, da die einzelnen Scheiben ja mit einer adhäsiven Verbindungsschicht untereinander verklebt sind. Das Vorspannen erhöht aber die Zug- und Biegefestigkeit sowie die Temperaturwechselbeständigkeit der Glasscheiben. Glas kann bekanntlich chemisch oder thermisch vorgespannt werden, wobei das thermische Vorspannen bei den relativ großen Dicken der Gläser für Glaskonstruktionen kostengünstiger ist. Selbst wenn solche vorgespannten Glasscheiben im Bruchfall in viele kleine Bruchstücke zerfallen, bleiben letztere doch infolge der guten Adhäsion zu der Zwischenschicht als (nachgiebiger) Körper erhalten, der Eindringversuchen immer noch einen verhältnismäßig hohen Widerstand entgegen setzt. Letzteres trifft insbesondere in einer Kombination mit einer hochfesten Folie oder Zwischenschicht des vorstehend erwähnten Produkttyps der Fa. DuPont zu. Als Zwischenschicht kommen jedoch auch alle derzeit bekannten Materialien in Frage bzw. auch jene, welche in Zukunft Verwendung finden werden, solange sie zum Einbetten von Halteelementen des hier beschriebenen Typs tauglich sind.

Die Verbindung der Scheiben untereinander und mit dem Halteelement erfolgt zweckmäßig mit einem an sich bekannten Verbindeverfahren unter Anwendung von Wärme und/ oder Druck. Als organische Verbindungsschicht hat sich dabei eine thermoplastische Klebefolie aus Polyvinylbutyral bewährt. Es können aber auch andere geeignete adhäsive Verbindungsschichten z. B. des vorgenannten hochfesten Typs eingesetzt werden, da damit eine besonders hohe Klebfestigkeit und Widerstandsfähigkeit erreicht wird. Das Verbindeverfahren muss in diesem Fall natürlich an die Verarbeitung dieser Zwischenschichten angepasst werden.

Die adhäsiven Verbindungsschichten für die starren Scheiben können auch weitere Aufgaben erfüllen, beispielsweise Schalldämmung, Filterung der UV-Strahlung des Sonnenlichts oder Farbgebung der Verbundscheibe. Außerdem ist es möglich, eine oder mehrere der die einzelnen Scheiben und/oder das Halteelement verbindenden Verbindungsschichten als Laminat mit einer zusätzlichen Funktion auszugestalten. Dieses besteht dann aus zwei Verbindungsschichten, zwischen die eine weitere Kunststofffolie, etwa aus Polyethylenterephthalat eingelegt ist. Diese Kunststofffolie kann zum Beispiel selbst eingefärbt sein oder mit einer ein bestimmtes Spektrum elektromagnetischer Strahlung, insbesondere Infrarot-Strahlen, reflektierenden, optisch transparenten Dünnschicht versehen sein.

Weitere Einzelheiten und Vorteile des Gegenstands der Erfindung gehen aus der Zeichnung eines Ausführungsbeispiels ohne einschränkenden Charakter und deren sich im folgenden anschließender eingehender Beschreibung hervor.

Es zeigen in vereinfachter, nicht maßstäblicher Darstellung

Fig. 1 eine Ansicht eines Klemmbeschlags in einer Plattenkonstiuuktion, z. B. einer Fassadenverglasung, der vier Ecken von Verbundscheiben fixiert;

Fig. 2 eine Schnittansicht des Klemmbeschlags nach Fig. 1 mit den einander gegenüber liegenden Ecken zweier erfindungsgemäß ausgeführter Verbundscheiben;

Fig. 3 eine vergrößerte Detailansicht aus Fig. 2;

Fig. 4a und 4b zwei Bauformen von Halteelementen zum Einsetzen in Verbundscheiben.

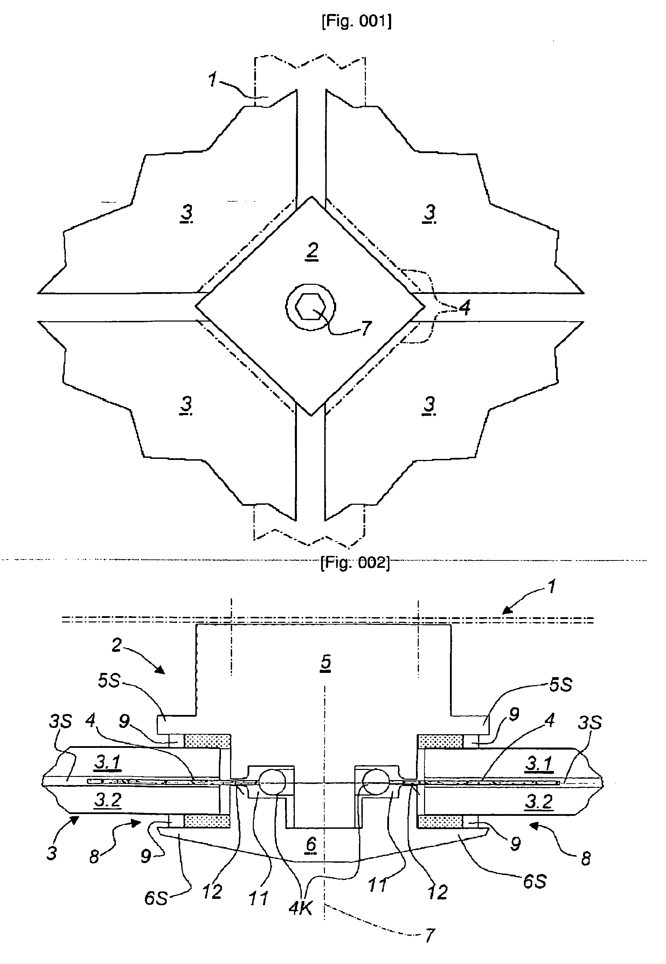

Gemäß Fig. 1 umfasst eine Haltekonstruktion 1, von deren Unterkonstruktion hier nur ein vertikaler Profilträger schematisch repräsentiert ist, mindestens einen Klemmb_{d}schlag 2, der je nach statischen Anforderungen als Fest- oder Loslager mit der Haltekonstruktion verbunden sein kann. Anstelle des Profilträgers könnte auch ein Seilspannsystem oder ähnliche geeignete Konstruktionselemente vorgesehen werden.

Der Klemmbeschlag 2 erfasst und überdeckt die (hier rechtwinkligen) Ecken von vier Verbundscheiben 3, die somit an diesen Ecken von dem Klemmbeschlag 2 an der Haltevorrichtung fixiert sind. Mit strichpunktierten Linien sind die Kanten von in die Verbundscheiben 3 eingesetzten Halteelementen 4 angedeutet, deren Aufbau und Funktion in der Schnittdarstellung der Fig. 2 besser erkennbar sind.

Abweichend von dieser Darstellung könnten die erfindungsgemäßen einlaminierten oder eingebetteten Halteelemente auch im Längsveriauf einer oder mehrerer Kanten der Verbundscheiben eingelegt werden. Man wird dann auch an den entsprechenden Punkten der Unterkonstruktion geeignete Aufnahmemaßnahmen vorsehen. Z. B. kommt eine solche Konfiguration, bei der Sicherungs- oder Halteelemente im Kantenverlauf der Verbundscheiben angeordnet sind, bei solchen Verglasungen in Frage, die ohnehin die Verbundscheiben in einen vollständigen oder jedenfalls abschnittweisen Rahmen einfassen. Selbstverständlich kann man abhängig von der Konstruktionsweise auch Ecken- und Kantensicherungen miteinander kombinieren.

In einer weiteren von dieser Darstellung abweichenden Variante werden ein oder mehrere Halteelemente an einer oder um eine Lochbohrung einer Verbundscheibe eingelegt, in welche sodann ein Klemmbeschlag (sogenannte Punkthalter) einzusetzen ist. Gegenüber Fig. 1 würde sich in dieser Punkthalter-Variante rein optisch die Änderung ergeben, dass nicht die Eckpunkte von vier Scheiben von einem Beschlag gehalten werden, sondern nur eine einzige Scheibe 3, in deren Lochbohrung der mit der Haltekonstruktion 1 verbundene Beschlag 2 eingesetzt ist. Die bekannten Punkthalter-Beschläge sind außerdem meist in der Draufsicht rund (vgl. z. B. EP 655 543 B1, EP 201 212 B1). In dieser Variante ragt ein "äußerer" Abschnitt jedes Halteelementes in den Lichtraum der Lochbohrung hinein. Somit fasst der entsprechend modifizierte Beschlag oder Punkthalter nicht nur die Verbundcheibe bzw. die Lochleibung, sondern auch das oder die Halteelemente ein, soweit sie über den Lochrand hinausragen.

In Fig. 2 erkennt man wieder die nur schematisch angedeutete Haltekonstruktion 1, an der der Klemmbeschlag 2 mit nur durch senkrechte strichpunktierte Linien angedeuteten Schrauben oder dgl. lösbar befestigt ist. Der Klemmbeschlag 2 umfasst mehrere Einzelteile, nämlich einen Sockel 5, ein Verschlussstück 6 und eine nur durch ihre Mittellinie repräsentierte zentrale Schraube 7, deren Kopf in Fig. 1 erkennbar ist.

Der Sockel 5 und das Verschlussstück 6 bilden zwischen jeweils an sie angeformten Schultern 5S bzw. 6S Aufnahmefächer 8 für die Ecken der Verbundscheiben 3. Letztere werden in den Aufnahmefächern 8 zwischen elastischen Kunststoff-Zwischenlagen 9 eingefasst. Diese können als Standard-Zwischenlagen aus jedem für den direkten Kontakt mit Glas- oder Kunststoffoberflächen geeigneten Material ausgeführt sein. Sie können aber auch eine zusätzliche adhäsive Festlegung der Verbundscheiben in den Klemmhaltern sowie auch eine gewisse Versiegelung der Aufnahmefächer -und damit des zwischen dem Sockel und dem Verschlussstück eingeschlossenen Raumsnach außen besorgen. Eine Versiegelung und Adhäsion wird beispielsweise durch Einbringen einer geeigneten adhäsiven und dauerelastischen Masse -z. B. Standardsilikon- nach dem Fügen des Verchlussstücks 6 erreicht. Diese adhäsive Unterstützung der Festlegung der Verbundscheiben 3 ist jedoch im Vergleich zu der der einlaminierten Halteelemente eher gering.

Ein Schnitt durch die schon erwähnte Punkthalter-Variante sähe nicht wesentlich anders aus. In diesem Ausführungsfall bilden der Sockel 5 und das Verschlussstück 6 zwischen den jeweils an sie angeformten Schultern 5S bzw. 6S ein umlaufendes Aufnahme- oder Klemmfach 8 für den Rand der besagten Lochbohrung in der Scheibe 3. Die Erfindung ist selbstverständlich auch mit solchen Punkthaltern anwendbar, die flächenbündig mit der (in Einbaulage außen liegenden) Oberfläche der Verbundscheibe abschließen und lediglich mit entsprechenden Modifikationen (Aufnahmeräume für die Haltekörper) auszustaten sein werden.

Man erkennt die Zwischenschicht 3S der Verbundscheiben zwischen den beiden starren Scheiben 3.1 und 3.2. Im Bereich der Scheibenränder, die in den Anfnahmefächem 8 liegen, sind in dieser Zwischenschicht die Halteelemente 4 eingebettet, die aus einem in der Zwischenschicht liegenden Flachabschnitt sowie einem fest mit diesem verbundenen, außerhalb des Verbundes befindlichen Haltekörper 4K bestehen.

Es versteht sich, dass die Verbundscheiben abweichend von dieser Darstellung auch aus mehr als zwei starren Scheiben und mehr als einer Zwischenschicht aufgebaut werden können. Halteelemente der hier erörterten Art könnten dann in nur einer Zwischenschicht oder auch in mehreren Zwischenschichten eingebettet sein, ggf. sogar in verschiedenen Ebenen.

Die Haltekörper 4K sind jeweils in einem Aufnahmeraum 11 eingeschlossen, der durch entsprechend eingeformte Ausnehmungen zwischen dem Sockel 5 und dem Verschlussstück 6 gebildet ist und der über eine schmale Fuge oder einen schmalen Spalt 12 zu den Aufnahmefächern 8 hin geöffnet ist. Der flächige Abschnitt der Halteelemente 4 kann diesen Spalt / diese Fuge ohne Berührung mit dessen / deren Wänden durchdringen, ggf. mit nur leichtem Kontakt. Bei Bedarf kann aber auch in diesem Bereich eine Einspannung vorgesehen werden.

In der Punkthalter-Variante könnte man einerseits ebenfalls eine Mehrzahl von Haltekörpern 4K im Lichtraum der Lochbohrung vorsehen, oder auch diese beispielsweise zu einem Ring zusammenfassen. Um letzteren anzudeuten, sind in Fig. 2 gestrichelte Umlaufkanten an dem Haltekörper 4K gezeichnet.

Es ist dann aber nicht unbedingt erforderlich, den Aufnahmeraum kammerartig mit nur einer schlitzartigen Öffnung auszuführen, wenn dieser Halte-Ring die zentrale Achse des zugehörigen Punkthalters umgibt. Es kann dann beispielsweise genügen, in dem Punkthalter eine umlaufende Rille oder Nut vorzusehen, in die der Halte-Ring einsetzbar ist und in der er axial nach der Montage des Punkthalters nicht oder nur geringfügig verschiebbar ist, insbesondere nicht über das freie (von der Haltekonstruktion abgewandte) Ende des Punkthalters abgestreift werden kann. Da bei einem Bruch der Verbundscheibe der Punkthalter im allgemeinen unbeschädigt bleibt, ist auch damit eine hinreichende Sicherung gemäß der vorliegenden Erfindung geschaffen.

Der Sockel 5 und das Verschlussstück 6 sind zugleich so aufeinander abgestimmt, dass sie mithilfe der Schraube 7 fest (in der Regel unter Drehmomentvorgabe) aufeinander spannbar sind, und dabei eine definierte Resthöhe der Aufnahmefächer 8 erhalten bleibt. Diese Resthöhe erlaubt es, in Abstimmung auf die Dicke der Verbundscheiben 3 eine sichere und spielfreie Befestigung der Verbundscheiben an der Haltekonstruktion sicher zu stellen. Maßabweichungen und Toleranzen können durch die (wählbare) Dicke der Zwischenlagen 9, in geringem Maß natürlich unmittelbar durch deren Elastizität, ausgeglichen werden. Man vermeidet mit dieser Konstruktion übermäßige Zwängkräfte, welche die Zwischenschicht und/oder die starren Scheiben schädigen könnten. Zugleich ist ein begrenztes Gleiten und Ausrichten der Verbundscheiben jedenfalls vor dem endgültigen Festziehen der Schraube 7 möglich.

Auch der/die Haltekörper 4K wird/werden nicht mechanisch formschlüssig in den Anfnahmeräumen 11 eingespannt; man vermeidet damit insbesondere unerwünscht Zwängungen und Beeinträchtigungen der vordefinierten Klemmkräfte zwischen dem Sockel 5 und dem Verschlussstück 6. Abweichend von der Darstellung können die Haltekörper natürlich als Hohlkörper oder auch mit anderen Querschnitten als dem hier gezeigten Rundquerschnitt ausgeführt werden.

Es ist jedoch auch denkbar, die Aufnahmeräume 11 nach dem endgültigen Fixieren der Verbundscheiben mit einer geeigneten aushärtenden oder dauerelastischen Gießmasse aufzufüllen. Dabei wird man ggf. nicht alle Aufnahmeräume 11 bzw. nicht alle Aufnahmefächer 8 vergießen, sondern man wird bei jeder Verbundscheibe nur einen Festpunkt vorsehen (voll vergossen) und in den anderen Klemmpunkten Freiheitsgrade zum Dehnungs- und Kraftausgleich belassen.

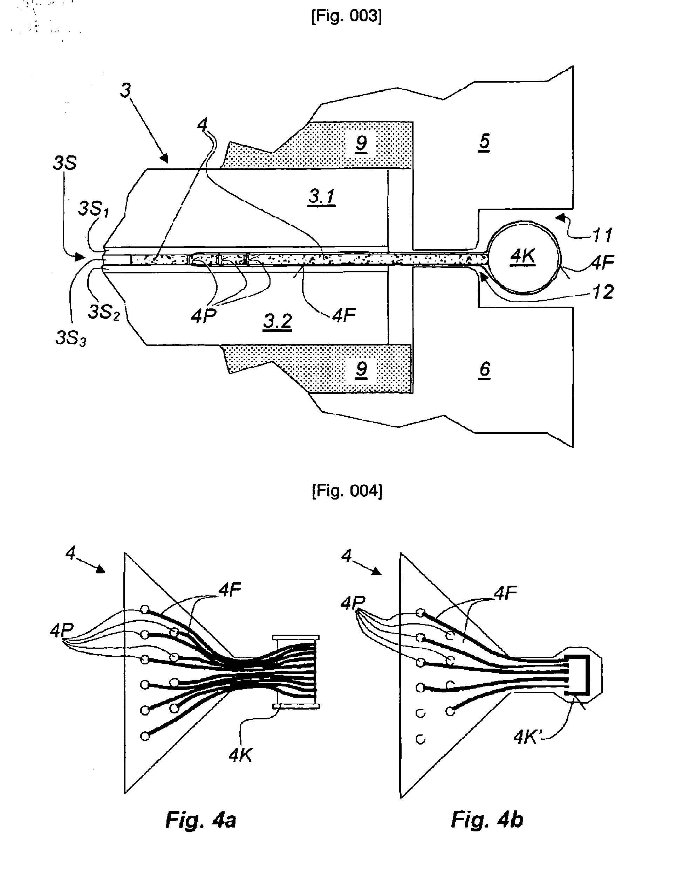

In der vergrößerten Detaildarstellnng in Fig. 3 sind gleiche Bauteile wieder mit denselben Bezugszeichen wie in Fig. 1 und 2 versehen. Es ist hier noch gezeigt, dass die Zwischenschicht 3S jedenfalls ursprünglich -vor dem endgültigen Herstellen des Klebeverbundes- in drei Lagen 3S₁, 3S₂, 3S₃ aufgeteilt ist, wobei letztere Lage die mittlere ist. Sie ist gegenüber den beiden äußeren Lagen im Bereich der Einbettung des Halteelements 4 zurück geschnitten, damit man in die Lücke den Flachabschnitt des Halteelements 4 einlegen kann. Die drei (vorzugsweise thermoplastischen) Lagen verschmelzen oder verfließen miteinander während der Verbundherstellung, so dass sie in der fertigen Verbundscheibe an sich nicht mehr ohne weiteres sichtbar sind. Hier werden sie nur zur Veranschaulichung des Ausschnittes gezeigt.

Es wäre natürlich grundsätzlich auch möglich, die starren Scheiben 3 mithilfe eines Gießharzes oder dgL flächig-adhäsiv zu verbinden und bei diesem Vorgang auch die Halteelemente 4 in die Zwischenschicht einzubetten. Dazu ist allerdings ein gewisser Mehraufwand beim Positionieren der Halteelemente 4 an den Ecken (und/oder an den Kanten) und möglichst exakt in der Mitte der Zwischenschicht-Ebene erforderlich. Hingegen entfiele damit das Aufschichten und Zuschneiden dreier Zwischenschicht-Folien.

Als weitere Option für die Herstellung eines Freiraums für die einzubettenden Halteelemente könnte man auch die starren Scheiben im betroffenen Aufnahmebereich flächig ausfräsen (jeweils auf ihrer später im Verbund innen liegenden Fläche), wobei jeder Scheibe um die Hälfte der Dicke des Flachabschnitts des Halteelements abgetragen würde. Bei Verwendung von Kunststoffscheiben, die im Spritzgießverfahren hergestellt werden, zum Herstellen der hier beschriebenen Verbundscheiben können solche Aussparungen natürlich schon in der Spritzform erzeugt werden.

Bei dieser Variante mit Ausnehmungen in den Scheibenflächen muss man nicht nur keine Zwischenschicht-Lage zurückschneiden, sondern könnte zur Gänze auf die dritte (mittlere) Lage 3S₃ gemäß Fig. 3 verzichten.

Auch das Halteelement 4 ist hier detaillierter gezeigt. Man erkennt, dass der Flachabschnitt von mehreren Perforationen 4P durchdrungen ist, und dass eine Anzahl von Fadensträngen 4F durch öder um diese Perforationen geführt ist, sodann beidseits längs des Flachabschnitts und durch den Spalt 12 bis in den Aufnahmeraum 11 geführt ist und dort schließlich den Haltekörper 4K umschlingt.

Die erwähnten Fadenstränge kann man aus einem einzigen, durchlaufenden Faden oder dgl. fertigen, der dann eben mehrfach durch Perforationen 4P und um den Haltekörper 4K geschlungen wird, und dessen beide Enden dann fest miteinander verbunden (verknotet, verschweißt, geklammert...) werden. Man kann auch jede Schlinge aus einem einzelnen Faden fertigen, oder man kombiniert beide vorerwähnten Optionen (es werden mehrere Fäden verwendet, deren jeder aber mehrere Perforationen durchläuft und auch mehrfach um den Haltekörper 4K geschlungen wird).

Man kann die Schlaufen aus Fäden (oder auch aus Fasern, aus Gewebesträngen) am vorgefertigten Halteelement vor dem Einbau in die Verbundscheibe einfach lose an - oder aufliegen lassen, da sie ja nach dem Herstellen des Verbundes ohnehin von dem Material der Zwischenschicht "gebunden" werden.

Als Option kann man die Schlaufen und den Flachabschnitt des Halteelements, ggf. auch noch den Haltekörper 4K selbst, mit einer dauerelastischen Gießmasse umhüllen oder ummanteln, die hier jedoch nicht dargestellt ist. Diese Gießmasse wird dann zumindest in den Abschnitten des Halteelementes vorgesehen, die außerhalb der fertigen Verbundscheibe bleibten. Im Inneren des Verbundes werden die Schlaufen ja ohnehin vom Material der Zwischenschicht umschlossen.

Aus den Fig. 2 und 3 ist gut erkennbar, dass die Haltekörper 4K in den Aufnahmeräumen 11 nur "eingesperrt" sind, wobei die durch die Spalte 12 geführten Flachabschnitte sowie die Fäden 4F sie fest mit den (eingeklemmten) Verbundscheiben verbinden. Sollte es zu einem Bruch der Verbundscheibe kommen, so können die Haltekörper 4K nicht aus den Aufnahmeräumen 11 austreten, sondern legen sich an die inneren Kanten der Spalte 12 an. Damit wird erkennbar eine Sicherung der Verbundscheiben an den Beschlägen 2 geschaffen (unabhängig davon, ob diese die Scheiben an Ecken, Kanten oder Lochbohrungen einfassen), die, wie die vorerwähnten Musterversuche gezeigt haben, mechanisch sehr hoch belastbar ist. Zugleich behindern diese Sicherungen in keiner Weise die schon erwähnten Freiheitsgrade an den Beschlägen, die Gleitbewegungen zwischen Verbundscheiben und Unterkonstruktion zum Ausgleichen von Dehnungsunterschieden oder Windlasten ermöglichen müssen.

Die Fig. 4a zeigt schematisch zur Veranschaulichung eine Ansicht eines einzelnen Halteelementes 4, mit den Perforationen 4P, den Fäden 4F und dem von letzteren umschlungenen Körper 4K. Die Dicke der Fäden und des Flachabschnittes des Halteelements 4 sind so auf die Dicke der Zwischenschicht 3S bzw. deren Lagen abzustimmen, dass sie sich zunächst ohne größere Zwängungen in den Ausschnitt der mittleren Lage einpassen und später beim Aufschmelzen der äußeren Lagen in diese einbetten lassen. Bei diesem Einbettungsvorgang -der von Wärme- und/oder Druckeinwirkung von außen begleitet wird- ergibt sich abgesehen von der Adhäsion zwischen den klebenden Verbund-Zwischenschichtlagen 3S₁ und 3S₂ und dem Flachabschnitt auch eine mechanisch sehr hoch belastbare Kombination aus Kraft-, Stoff- und Formschluss.

Fig. 4b zeigt noch eine Variante des Halteelements gemäB Fig. 4a, bei der der Haltekörper 4K der zuvor erörterten Ausführungen durch eine Halteöse 4K' ersetzt ist. Wieder sind die (hier nur der Übersichtlichkeit halber unterschiedlich gefärbt dargestellten) Fäden 4F durch Perforationen 4P des Flachabschnitts gezogen. Außerdem sind sie durch die Halteöse 4K' geschlungen. Letztere wird je nach anzunehmendem Lastfall auszulegen sein und eine sehr hohe Reißfestigkeit haben. Diese Halteöse 4K' wird in einer abgewandelten Bauform des Klemmbeschlags gemäß Fig. 1 bis 3 mithilfe eines Zapfens, Ansatzes oder dergleichen zumindest lose fixiert, wobei der Zapfen funktional an die Stelle des Aufhahmeraums 11 und des Spaltes 12 tritt. Grundsätzlich lässt sich mit dieser Variante ein insgesamt vergleichsweise flacher Aufbau des Halteelements außerhalb des Verbundes erreichen, wenn auch die Halteöse bei hoher zu erwartender Beanspruchung (z. B. großes Gewicht der Verbundscheiben) sicherlich nicht so flach ausgelegt werden kann wie der Flachabschnitt des Halteelements.

Für die schon mehrfach erwähnte Punkthalter-Variante kann das Halteelement (bzw. dessen im Verbund liegender Flachabschnitt) ferner als Ring oder als Ringabschnitt ausgeführt werden, der die Lochbohrung der Verbundscheibe vollständig oder teilweise umgibt. Auch der Haltekörper kann dann zweckmäßig als Ring ausgeführt werden, der die zentrale Achse des zugehörigen Punkthalters umgibt.

Es sei angemerkt, dass sich natürlich alle Bauformen der Halteelemente bzw. ihrer Haltekörper an einer Verbundscheibe kombinieren lassen. Beispielsweise kann mit ihrer Hilfe (oder mithilfe anderer, äquivalenter Varianten) sogar eine Lagecodierung der Verbundscheiben geschaffen werden, die deren lagerichtigen Einbau an einer Unterkonstruktion unterstützt. Nur zu Beispielszwecken : eine Halteöse 4K' könnte man jeweils an nur einer Ecke der Verbundscheibe 3 vorsehen, während deren andere Ecken mit Haltekörpern 4K ausgeführt würden. In diesem Fall kann durch die entsprechende Ausführung und Anordnung der Beschläge die Einbaulage der Scheibe eindeutig vorgegeben werden.

## Patentansprüche

1. Verbundscheibe (3) mit mindestens zwei starren Platten (3.1,3.2), insbesondere Glasscheiben, und einer diese flächig-adhäsiv miteinander verbindenden Zwischenschicht (3S), mit in die Ebene der Zwischenschicht zwischen die beiden starren Platten eingelegten und mit der Zwischenschicht fest verbundenen und sich über mindestens einen Rand der Platten hinaus erstreckenden flexiblen Halteelementen (4), die zum Sichern der Verbundscheibe an einer Unter- oder Haltekonstruktion (1) vorgesehen sind, **dadurch gekennzeichnet, dass** mit Perforationen (4P) versehene Flachabschnitte der Halteelemente (4) in die Zwischenschicht (35) eingelegt oder eingebettet sind, und dass hochfeste dünne Fäden (4F), Fasern oder Gewebestränge schlaufenartig durch diese Perforationen (4P) geführt sind und tragende Bestandteile der aus dem Verbund nach außen ragenden flexiblen Halteelemente (4) bilden.

2. Verbundscheibe nach Anspruch 1, bei der Halteelemente (4) in Eckbereichen der Verbundscheibe (3) in die Zwischenschicht (3) eingebettet sind.

3. Verbundscheibe nach Anspruch 1 oder 2, bei der Halteelemente (4) in Kantenbereichen der Verbundscheibe (3) in die Zwischenschicht (3) eingebettet sind.

4. Verbundscheibe nach Anspruch 1,2 oder 3, bei der mindestens ein Halteelement (4) in einem Lochbohrungsbereich der Verbundscheibe (3) in die Zwischenschicht (3) eingebettet ist und sich über den Rand der Bohrung hinaus in deren Lichtraum erstreckt.

5. Verbundscheibe nach einem der vorstehenden Ansprüche, **dadurch gekennzeichnet, dass** die Zwischenschicht (3S) aus drei Folien (3S₁, 3S₂, 3S₃) zusammengelegt ist, wobei die mittlere dieser Folien etwa die gleiche Dicke wie die besagten Plachabschnitte der Halteelemente (4) hat und mit Ausschnitten zum Aufnehmen dieser Flachabschnitte versehen ist, und dass die beiden äußeren Folien mit den Flachabschnitten und den durchgeführten Fäden oder Gewebesträngen adhäsiv verbunden sind.

6. Verbundscheibe nach einem der vorstehenden Ansprüche, **dadurch gekennzeichnet, dass** die starren Scheiben (3.1,3.2) der Verbundscheibe (3) auf ihren im Verbund innen liegenden Flächen mit flächigen Ausnehmungen versehen sind, um den Einbauraum für die Halteelemente (4) zu schaffen.

7. Verbundscheibe nach einem der Ansprüche 1 bis 4, **dadurch gekennzeichnet, dass** die Zwischenschicht durch Gießen einer aushärtenden Masse hergestellt ist und die Halteelemente darin eingebettet sind.

8. Verbundscheibe nach einem der vorstehenden Ansprüche, **dadurch gekennzeichnet, dass** die hochfesten Fäden (4F) oder Gewebestränge außerhalb der Zwischenschicht (3) schlaufenartig mit dreidimensionalen Haltemitteln (4K, 4K') verbunden sind oder diese umschlingen, welche Haltemittel im Einbauzustand der Verbundscheibe mit der Unterkonstruktion (1; 2) verbindbar und zum sichernden Halten der Verbundscheibe an der Unterkonstruktion (1; 2) zumindest bei Bruch der Verbundscheibe vorgesehen sind.

9. Verbundscheibe nach Anspruch 8, **dadurch gekennzeichnet, dass** die Halteelemente (4) als Einheiten aus Flachelementen, Fäden (4F), Fasern oder Gewebesträngen und Haltemitteln (4K, 4K') vorgefertigt sind.

10. Verbundscheibe nach Anspruch 8 oder 9, **dadurch gekennzeichnet, dass** die Haltemittel als von den Fäden (4F) umschlungene Haltekörper (4K) ausgebildet sind.

11. Verbundscheibe nach Anspruch 8 oder 9, **dadurch gekennzeichnet, dass** die Haltemittel als von den Fäden (4F) durchdrungene Halteösen (4K') ausgebildet sind.

12. Verbundscheibe nach einem der Ansprüche 8 bis 11, **dadurch gekennzeichnet, dass** die Fäden, Fasern oder Gewebestränge (4F) und das Halteelement (4) mindestens in ihren außerhalb des Verbundes angeordneten Abschnitten mit einer dauerelastischen Gießmasse ummantelt sind.

13. Verbundscheibe nach einem der vorstehenden Ansprüche, **dadurch gekennzeichnet, dass** die Fäden, Fasern oder Gewebestränge (4F) für jedes Halteelement aus einem oder mehreren durchlaufenden und an seinen ihren beiden Enden fest zu (einer) geschlossenen Schlaufe(n) verbundenen Strang Stränge gebildet sind.

14. Verbundscheibe nach einem der vorstehenden Ansprüche, **dadurch gekennzeichnet, dass** mindestens eine der starren Platten (3.1, 3.2) der Verbundscheibe eine vorgespannte Glasscheibe ist.

15. Anordnung aufweisend mindestens eine Verbundscheibe (3) nach einem der vorstehenden Ansprüche und eine Haltekonstruktion zum Halten und Befestigen dieser Verbundscheibe (3) mithilfe von Beschlägen (2), denen Mittel zum mechanischen Sichern der aus den Verbundscheiben herausgeführten flexiblen Halteelemente zugeordnet sind, **dadurch gekennzeichnet, dass** jeder Beschlag (2) mindestens einen Aufnahmeraum (11) und/oder einen Zapfen zum Sichern eines mit dem Halteelement (4) fest verbundenen dreidimensionalen Haltemittels (4K; 4K') aufweist.

16. Anordnung nach Anspruch 15, in der ein Flachabschnitt des Halteelements (4) außerhalb der Verbundscheibe durch einen in dem Beschlag vorgesehenen Spalt (12) geführt ist.

17. Anordnung nach Anspruch 15 oder 16, bei der Beschläge (2) als Klemmbeschlüge für Ecken der Verbundscheiben ausgeführt sind, wobei jeder Beschlag einen Sockel und ein Verschlussstück umfasst, die zwischen sich den Spalt (12) bilden und den Aufnahmeraum (11) oder den Zapfen umfassen, und ferner zwischen sich die dreidimensionalen Haltemitteln (4K; 4K') einfassen.

18. Anordnung nach einem der Ansprüche 15 bis 17, bei der Beschläge als Rahmen oder Rahmenabschnitte für Kanton der Verbundscheiben ausgeführt sind, wobei jeder Beschlag Bauteile umfasst, die zwischen sich den Spalt (12) bilden und den Aufnahmeraum (11) oder den Zapfen umfassen, und ferner zwischen sich die dreidimensionalen Haltemittel (4K; 4K') einfassen.

19. Anordnung nach einem der Ansprüche 15 bis 18, bei der mindestens ein Beschlag zum Einsetzen in eine Lochbohrung der Verbundscheibe, insbesondere als Punkthalter, ausgeführt ist, wobei er Bauteile umfasst, die zwischen sich den Aufnahmeraum (11) bilden oder den Zapfen umfassen, und ferner die dreidimensionalen Haltemittel (4K; 4K') mindestens in axialer Richtung der Lochbohrung einfassen.

20. Anordnung nach einem der Ansprüche 15 bis 19, in deren Beschlägen (2) die Halteelemente (4, 4K; 4K') lose und im Einbaufall lastfrei aufgenommen sind.

21. Anordnung nach einem der Ansprüche 15 bis 20, bei der die Haltemittel der Halteelemente (4) als Haltekörper (4K) ausgebildet sind, die im Binbauzustand in einem Aufnahmeraum (11) der Beschläge (2) angeordnet sind.

22. Anordnung nach einem der Ansprüche 15 bis 21, bei der die Haltemittel der Halteelemente (4) als Halteösen (4K') ausgebildet sind, die im Einbauzustand in einem Aufnahmeraum (11) der Beschläge (2) angeordnet und darin mithilfe eines sie durchdringenden Zapfens oder dgl. der Beschläge gesichert sind.

23. Anordnung nach einem der Ansprüche 15 bis 22, in deren Beschlägen (2) die Halteelemente (4, 4K; 4K') im Einbaufalll astfrei, jedoch wenigstens teilweise mit einer Gießmasse vergossen aufgenommen sind.

24. Grebäude-Verglasung, insbesondere Fassade, Dachfläche, Innenwand, die Verbundscheiben nach einem der vorstehenden Ansprüche umfasst.

25. Gebäude-Verglasung nach Anspruch 24,
**dadurch gekennzeichnet,**
**dass** eine Haltekonstruktion nach einem der vorstehenden Ansprüche vorgesehen ist.

## Claims

1. A composite pane (3) having at least two rigid plates (3.1, 3.2), in particular glass panes, and an intermediate layer (3S) which connects said rigid plates to one another by surface adhesion, and having flexible holding elements (4) which are positioned in the plane of the intermediate layer between the two rigid plates and are fixedly connected to the intermediate layer and extend over at least one edge of the plates and are intended to secure the composite pane to a substructure or holding structure (1),
**characterized in that**
flat sections of the holding elements (4) provided with perforations (4P) are inserted into or embedded in the intermediate layer (3S), and that high-strength thin filaments (4F), fibres or woven strands are guided in looped form through said perforations (4P) and form load-bearing parts of the flexible holding elements (4) which project outward out of the composite.

2. The composite pane as claimed in claim 1, wherein holding elements (4) are embedded in the intermediate layer (3) in corner regions of the composite pane (3).

3. The composite pane as claimed in claim 1 or 2, wherein the holding elements (4) are embedded in the intermediate layer (3) in edge regions of the composite pane (3).

4. The composite pane as claimed in claim 1, 2 or 3, wherein at least one holding element (4) is embedded in the intermediate layer (3) in a region of a drilled hole passing through the composite pane (3) and extends beyond the edge of the drilled hole into the clear space of the latter.

5. The composite pane as claimed in any of the preceding claims,
**characterized in that**
the intermediate layer (3S) is composed of three films (3S₁, 3S₂, 3S₃), the middle one of said films being of approximately the same thickness as said flat sections of the holding elements (4) and being provided with cut-outs for accommodating said flat sections, and that the two outer films are adhesively joined to the flat sections and to the filaments or woven strands passed through them.

6. The composite pane as claimed in any of the preceding claims,
**characterized in that**
the rigid panes (3.1, 3.2) of the composite pane (3) are provided, on their inner surfaces in the composite, with planar recesses creating the installation space for the holding elements (4).

7. The composite pane as claimed in any of the claims 1 to 4,
**characterized in that**
the intermediate layer is produced by casting a curable compound and the holding elements are embedded therein.

8. The composite pane as claimed in any of the preceding claims,
**characterized in that**
the high-strength filaments (4F) or woven strands, outside the intermediate layer (3), are connected in a looped fashion to three-dimensional holding means (4K, 4K') or are wrapped around these holding means, which holding means, in an installed state of the composite pane, can be connected to the substructure (1; 2) and are configured to securely hold the composite pane to the substructure (1; 2) at least in the event of the composite pane breaking.

9. The composite pane as claimed in claim 8,
**characterized in that**
the holding elements (4) are prefabricated as units composed of flat elements, filaments (4F), fibres or woven strands and holding means (4K, 4K').

10. The composite pane as claimed in claim 8 or 9,
**characterized in that**
the holding means are designed as holding bodies (4K) with the filaments (4F) wrapped around them.

11. The composite pane as claimed in claim 8 or 9,
**characterized in that**
the holding means are designed as holding eyelets (4K') through which the filaments (4F) pass.

12. The composite pane as claimed in any of the claims 8 to 11,
**characterized in that**
the filaments, fibres or woven strands (4F) and the holding element (4), at least in their sections arranged outside the composite, are surrounded by a permanently elastic casting compound.

13. The composite pane as claimed in any of the preceding claims,
**characterized in that**
the filaments, fibres or woven strands (4F) for each holding element are formed from one or more continuous strand/strands securely connected at the two ends thereof to form one or more closed loop/loops.

14. The composite pane as claimed in any of the preceding claims,
**characterized in that**
at least one of the rigid plates (3.1, 3.2) of the composite pane is a prestressed glass pane.

15. An arrangement having at least one composite pane (3) as claimed in any of the preceding claims and a holding structure for holding and securing said composite pane (3) with the aid of fittings (2), which are assigned means for mechanically securing the flexible holding elements leading out of the composite panes,
**characterized in that**
each fitting (2) has at least one receiving space (11) and/or a pin for securing a three-dimensional holding means (4K; 4K') which is fixedly connected to the holding element (4).

16. The arrangement as claimed in claim 15, wherein a flat section of the holding element (4) outside the composite pane is passed through a gap (12) provided in the fitting.

17. The arrangement as claimed in claim 15 or 16, wherein fittings (2) are designed as clamping fittings for corners of the composite panes, each fitting comprising a pedestal and a closure piece, which between them form a gap (12) and surround the receiving space (11) or the pin, and also enclose the three-dimensional holding means (4K; 4K') between them.

18. The arrangement as claimed in any of the claims 15 to 17, wherein fittings are designed as frames or frame sections for edges of the composite panes, each fitting comprising components which between them form the gap (12) and surround the receiving space (11) or the pin, and also enclose the three-dimensional holding means (4K; 4K') between them.

19. The arrangement as claimed in any of the claims 15 to 18, wherein at least one fitting is designed to be inserted in a drilled hole in the composite pane, in particular as a point holder, said fitting comprising components which between them form the receiving space (11) or surround the pin, and also enclose the three-dimensional holding means (4K; 4K') at least in the axial direction of the drilled hole.

20. The arrangement as claimed in any of the claims 15 to 19, wherein the holding elements (4, 4K; 4K') are accommodated in the fittings loosely and, when installed, free of loads.

21. The arrangement as claimed in any of the claims 15 to 20, wherein the holding means of the holding elements (4) are designed as holding bodies (4K) which, in an installed state, are arranged in a receiving space (11) of the fittings (2).

22. The arrangement as claimed in any of the claims 15 to 21, wherein the holding means of the holding elements (4) are designed as holding eyelets (4K'), which, in an installed state, are arranged in a receiving space (11) of the fittings (2) and are secured therein with a pin or the like of the fittings passing through them.

23. The arrangement as claimed in any of the claims 15 to 22, wherein the holding elements (4, 4K; 4K'), when installed, are accommodated in the fittings (2) free of load, but at least partially cast with a casting compound.

24. A building glazing, in particular a facade, roof surface, interior wall, comprising composite panes as claimed in any of the preceding claims.

25. The building glazing as claimed in claim 24,
**characterized in that**
a holding structure as claimed in any of the preceding claims is provided.

## Revendications

1. Plaque composite (3) comportant au moins deux plaques rigides (3.1, 3.2), en particulier des vitres, et une couche intermédiaire (3S) connectant lesdites plaques rigides entre elles par adhésion superficielle, comportant des éléments de maintien (4) flexibles étant insérés dans le plan de la couche intermédiaire entre les deux plaques rigides et connectés rigidement à la couche intermédiaire et dépassant au moins un bord desdites plaques, lesdits éléments de maintien étant prévus pour fixer la plaque composite à une sous-structure ou structure de maintien (1),
**caractérisée en ce que**
des sections plates des éléments de maintien (4) pourvues de perforations (4P) sont insérées ou incorporées dans la couche intermédiaire (3S), et que des filaments (4F) fins à haute résistance, des fibres ou des cordes tissées sont guidés à travers lesdites perforations (4P) en formant des boucles et constituent des composants porteurs des éléments de maintien (4) flexibles faisant saillie vers l'extérieur à partir de l'ensemble composite.

2. Plaque composite selon la revendication 1,
dans laquelle des éléments de maintien (4) sont incorporés dans la couche intermédiaire (3) dans des régions de coin de la plaque composite (3).

3. Plaque composite selon la revendication 1 ou 2,
dans laquelle des éléments de maintien (4) sont incorporés dans la couche intermédiaire (3) dans des régions de bord de la plaque composite (3).

4. Plaque composite selon les revendications 1, 2 ou 3,
dans laquelle au moins un élément de maintien (4) est incorporé dans la couche intermédiaire (3) dans une région de perçage de la plaque composite (3) et, en dépassant le bord du perçage, s'étend dans l'espace intérieur du perçage.

5. Plaque composite selon l'une quelconque des revendications précédentes,
**caractérisée en ce que**
la couche intermédiaire (3S) est composée de trois films (3S₁, 3S₂, 3S₃), celui de milieu ayant environ la même épaisseur que lesdites parties plates des éléments de maintien (4) et étant pourvu d'échancrures pour recevoir lesdites parties plates, et que les deux films extérieurs sont connectés de manière adhésive aux parties plates et aux filaments ou cordes tissées passés à travers.

6. Plaque composite selon l'une quelconque des revendications précédentes,
**caractérisée en ce que**
les plaques rigides (3.1, 3.2) de la plaque composite (3), à leurs surfaces orientées vers l'intérieur de l'ensemble composite, sont pourvues d'évidements plans en vue de créer l'espace de montage pour les éléments de maintien (4).

7. Plaque composite selon l'une quelconque des revendications 1 à 4,
**caractérisée en ce que**
la couche intermédiaire est fabriquée par coulée d'une masse durcissable et les éléments de maintien y sont incorporés.

8. Plaque composite selon l'une quelconque des revendications précédentes,
**caractérisée en ce que**
les filaments à haute résistance (4F) ou les cordes tissées sont connectés en dehors de la couche intermédiaire (3) en formant des boucles avec des moyens de maintien (4K, 4K') tridimensionnels ou les enlacent, lesdits moyens de maintien, en état monté de la plaque composite, étant connectables à la sous-structure (1 ; 2) et étant prévus pour fixer solidement la plaque composite à la sous-structure (1 ; 2), au moins au cas où la plaque composite se brise.

9. Plaque composite selon la revendication 8,
**caractérisée en ce que**
les éléments de maintien (4) sont préfabriqués sous forme d'unités composées d'éléments plats, de filaments (4F), de fibres ou de cordes tissées et de moyens de maintien (4K, 4K').

10. Plaque composite selon la revendication 8 ou 9,
**caractérisée en ce que**
les moyens de maintien sont formés sous forme de corps de maintien (4K) enlacés par les filaments (4F).

11. Plaque composite selon la revendication 8 ou 9,
**caractérisée en ce que**
les moyens de maintien sont formés sous forme d'oeillets de maintien (4K') pénétrés par les filaments (4F).

12. Plaque composite selon l'une quelconque des revendications 8 à 11,
**caractérisée en ce que**
les filaments, fibres ou cordes tissées (4F) et l'élément de maintien (4) sont gainés d'une masse de coulage élastique permanente au moins dans leurs parties disposées à l'extérieur de l'ensemble composite.

13. Plaque composite selon l'une quelconque des revendications précédentes,
**caractérisée en ce que**
pour chaque élément de maintien, les filaments, fibres ou cordes tissées (4F) sont formés d'une ou de plusieurs corde/cordes continue(s) étant rigidement connectée(s) à ses/leurs deux extrémités en formant une/des boucle(s) fermée(s).

14. Plaque composite selon l'une quelconque des revendications précédentes,
**caractérisée en ce qu'**
au moins une des plaques rigides (3.1, 3.2) de la plaque composite est une vitre précontrainte.

15. Agencement comportant au moins une plaque composite (3) selon l'une quelconque des revendications précédentes et une structure de maintien pour maintenir et fixer ladite plaque composite (3) à l'aide de raccords (2) auxquels des moyens pour la fixation mécanique des éléments de maintien flexibles sortant des plaques composites sont assignés,
**caractérisés en ce que**
chaque raccord (2) a au moins un espace de réception (11) et/ou une broche pour fixer un moyen de maintien (4K ; 4K') tridimensionnel rigidement connecté à l'élément de maintien (4).

16. Agencement selon la revendication 15,
dans lequel une partie plate de l'élément de maintien (4) à l'extérieur de la plaque composite est guidée a travers une fissure (12) prévue dans le raccord.

17. Agencement selon la revendication 15 ou 16,
dans lequel des raccords (2) sont réalisés sous forme de raccords à serrage pour des coins des plaques composites, dans lequel chaque raccord comprend une embase et une pièce de fermeture qui forment entre elles la fissure (12) et comprennent l'espace de réception (11) ou la broche, et en outre elles encadrent entre elles les moyens de maintien (4K ; 4K') tridimensionnels.

18. Agencement selon l'une quelconque des revendications 15 à 17,
dans lequel des raccords sont réalisés sous forme de cadres ou de sections de cadre, dans lequel chaque raccord comprend des composants qui forment entre eux la fissure (12) et comprennent l'espace de réception (11) ou la broche et en outre ils encadrent entre eux les moyens de maintien (4K ; 4K') tridimensionnels.

19. Agencement selon l'une quelconque des revendications 15 à 18,
dans lequel au moins un raccord est réalisé pour être inséré dans un perçage de la plaque composite, en particulier sous forme de support ponctuel, ledit raccord comprenant des composants qui entre eux forment l'espace de réception (11) ou comprennent la broche et qui en outre encadrent les moyens de maintien (4K ; 4K') tridimensionnels au moins en direction axiale du perçage.

20. Agencement selon l'une quelconque des revendications 15 à 19,
dans les raccords (2) duquel les éléments de maintien (4, 4K ; 4K') sont reçus de façon lâche et, en état monté, sans charge.

21. Agencement selon l'une quelconque des revendications 15 à 20, dans lequel les moyens de maintien des éléments de maintien (4) sont réalisés sous forme de corps de maintien (4K) qui sont arrangés dans un espace de réception (11) des raccords (2) en état monté.

22. Agencement selon l'une quelconque des revendications 15 à 21, dans lequel les moyens de maintien des éléments de maintien (4) sont réalisés sous forme d'oeillets de maintien (4K') qui, en état monté, sont disposés dans un espace de réception (11) des raccords (2) et y sont fixés à l'aide d'une broche ou d'autres choses semblables des raccords qui les pénètrent.

23. Agencement selon l'une quelconque des revendications 15 à 22, dans les raccords (2) duquel les éléments de maintien (4, 4K ; 4K') en état monté sont reçus sans charge, mais au moins partiellement scellés avec une masse de coulage.

24. Vitrage pour des bâtiments, en particulier une façade, une surface de toit, un mur intérieur, comprenant des plaques composites selon l'une quelconque des revendications précédentes.

25. Vitrage pour des bâtiments selon la revendication 24,
**caractérisé en ce qu'**
une structure de maintien selon l'une quelconque des revendications précédentes est prévue.
